(19) **Europäisches Patentamt**

**European Patent Office**

**Office européen des brevets**

(11) **EP 1 561 951 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(51) Int Cl.:
*F15B 13/044* *(2006.01)*     *F16K 31/06* *(2006.01)*
*G05D 7/06* *(2006.01)*     *F15B 19/00* *(2006.01)*

(21) Anmeldenummer: **05001370.5**

(22) Anmeldetag: **25.01.2005**

(54) **Verfahren zum Einstellen des Steuerstroms von stromgesteuerten Hydraulikventilen**

Method for adjusting the control current of hydraulic solenoid valves

Méthode pour ajuster le courant de commande d'électrovannes hydrauliques

(84) Benannte Vertragsstaaten:
**DE FR GB IT SE**

(30) Priorität: **03.02.2004 DE 102004005401**

(43) Veröffentlichungstag der Anmeldung:
**10.08.2005 Patentblatt 2005/32**

(73) Patentinhaber: **Jungheinrich Aktiengesellschaft**
**22047 Hamburg (DE)**

(72) Erfinder:
• **Allerding, Uwe, Dipl.-Ing.**
**21409 Ehbsen (DE)**
• **Düwel, Matthias, Dipl.-Ing.**
**22301 Hamburg (DE)**
• **Stolten, Thomas, Dipl.-Ing.**
**22967 Tremsbüttel (DE)**

(74) Vertreter: **Graalfs, Edo**
**Patentanwälte Hauck, Graalfs**
**Wehnert, Döring, Siemons, Schildberg**
**Postfach 11 31 53**
**20431 Hamburg (DE)**

(56) Entgegenhaltungen:
**EP-A- 1 002 454**     **US-A- 5 285 715**
**US-B2- 6 463 949**

**Beschreibung**

Die Erfindung bezieht sich auf ein Verfahren zum Einstellen des Steuerstroms von stromgesteuerten Hydraulikventilen zur Betätigung einzelner Hydraulikfunktionen von Flurförderzeugen nach dem Oberbegriff des Patentanspruchs 1.

Bei Flurförderzeugen ist bekannt, eine Reihe von Funktionen hydraulisch zu betätigen. Hierzu gehören das Heben und Senken eines Lasttragmittels, das Verschieben eines Hubgerüstes bei einem Schubmaststapler, das Neigen des Hubgerüstes und gegebenenfalls auch das seitliche Verschieben des Lasttragmittels. Zu jeder Funktion gehört mindestens ein hydraulischer Verstellzylinder, und die Ansteuerung des Verstellzylinders erfolgt mit Hilfe eines Hydraulikventils. Beim Öffnen des Ventils bewegt sich das betätigte Teil mit einer vorgegebenen Geschwindigkeit, die naturgemäß von dem Öffnungsquerschnitt des Hydraulikventils abhängt, einen vorgegebenen Druck vorausgesetzt. Der Durchströmquerschnitt des Ventils wird bekanntlich durch ein Vorsteuermittel, etwa durch einen Elektromagneten, eingestellt. Der Steuerstrom am Elektromagneten bestimmt mithin den wirksamen Querschnitt.

Je nach Hubhöhe, Fahrzeugausführung usw. ist die Geschwindigkeit, mit der das hydraulisch betätigte Teil bewegt wird, entsprechend einzustellen. Der Steuerstrom für die jeweiligen Ventile wird mit Hilfe einer elektronischen Steuervorrichtung erzeugt, die ihrerseits ein Gebersignal von einem z.B. manuell betätigten Bedienelement oder dergleichen erhält. Aufgrund nicht vermeidbarer Fertigungstoleranzen ergeben sich bei einem vorgegebenen Steuerstrom am Ventil unterschiedliche Funktionsgeschwindigkeiten. Es ist daher bekannt, jedes Hydraulikventil mit Hilfe eines Bordcomputers des Flurförderzeugs vor Inbetriebnahme zu justieren.

Der Steuerstrom zur Ansteuerung des Elektromagneten wird manuell korrigiert. Ein derartiges Verfahren ist zeitaufwendig und kann zu fehlerhaften Einstellungen führen.

Der Erfindung liegt daher die Aufgabe zugrunde, ein Verfahren zum Einstellen des Steuerstroms von stromgesteuerten Hydraulikventilen zur Betätigung einzelner Hydraulikfunktionen von Flurförderzeugen anzugeben, das schneller und einfacher durchgeführt werden kann.

Diese Aufgabe wird durch die Merkmale des Patentanspruchs 1 gelöst.

Bei dem erfindungsgemäßen Verfahren wird für jede durch eine Ventil gesteuerte hydraulische Funktion durch Versuche oder rechnerisch eine mittlere Kennlinie für den Steuerstrom des Ventils in Abhängigkeit vom Volumenstrom ermittelt. Ein derartiger Vorgang kann z.B. beim Hersteller der Hydraulikventile erfolgen, wobei eine statistische Zahl von Ventilen vermessen wird. Es ist auch üblich, daß der Hersteller von Ventilen jedes einzelne Ventil vermißt und vor Auslieferung an den Abnehmer den Volumenstrom in Abhängigkeit vom elektrischen Strom ermittelt. Aufgrund der vorhandenen Hysterese werden die Ströme bei ansteigenden und bei abfallenden Werten gemessen. Beim erfindungsgemäßen Verfahren wird aus den spezifischen Kennlinienwerten für jedes Ventil ein mittlerer Steuerstromwert bestimmt. Es wird beispielsweise bei halbem Nennvolumenstrom ein mittlerer Steuerstromwert gebildet. Aus dem gemittelten Steuerstromwert kann die Abweichung gegenüber der bereits statistisch ermittelten Kennlinie festgestellt werden. Aus dieser läßt sich z.B. für den halben Nennvolumenstrom der typische mittlere Stromwert ermitteln. Der Korrekturwert für ein individuelles Ventil ergibt sich aus der Differenz der ermittelten Stromsteuerwerte addiert um eine Konstante, so können negative Werte vermieden werden. Wenn auch negative Werte codiert werden können, so könnte die Konstante auch Null sein. Der Korrekturwert wird als Code, beispielsweise als Barcode, auf das Ventil aufgebracht. Beim Einbau des Ventils kann mit Hilfe eines geeigneten Codelesers, z.B. eines Barcodescanners, der Korrekturwert in die Steuervorrichtung eingelesen werden. In der Steuervorrichtung ist die bereits erwähnte mittlere Kennlinie abgelegt. Im Betrieb ist dann erforderlich, den jeweils vom Bediener über einen Geber in der Steuervorrichtung erzeugten Steuerstrom für das Ventil um den bereits erwähnten Korrekturwert zu verändern, was in der Steuervorrichtung dann automatisch erfolgt.

Bei dem erfindungsgemäßen Verfahren wird von der Erkenntnis ausgegangen, daß bei ansonsten gleichen Hydraulikventilen einer bestimmten Konstruktion der Kennlinienverlauf stets annähernd gleich ist und Toleranzen zwischen den Ventilen lediglich zu einer Verschiebung der Kennlinie im Kennliniendiagramm führen. Mit anderen Worten, die erzielbaren Volumenstromwerte bei einzelnen Ventilen variieren bei bestimmten Steuerstromwerten oder anders ausgedrückt, ein bestimmter Volumenstrom wird für Ventile gleicher Auslegung mit unterschiedlichen Steuerstromwerten erzielt. Dadurch, daß nach dem erfindungsgemäßen Verfahren das Hydraulikventil im Hinblick auf den Steuerstrom justiert ist, ergibt sich für verschiedene Flurförderzeuge im Hinblick auf ihre Hydraulikfunktionen stets gleiches Verhalten.

Das erfindungsgemäße Verfahren hat den Vorteil, daß die Ventileinstellung nahezu vollautomatisch abläuft, daher der Zeitaufwand bei der Montage deutlich reduziert ist. Ein weiterer Vorteil liegt darin, daß einheitliche Funktionsgeschwindigkeiten eingestellt werden können. Da eine falsche Ventileinstellung zu unnötig hohem Energieverbrauch führen kann, ermöglicht das erfindungsgemäße Verfahren auch eine Energieeinsparung.

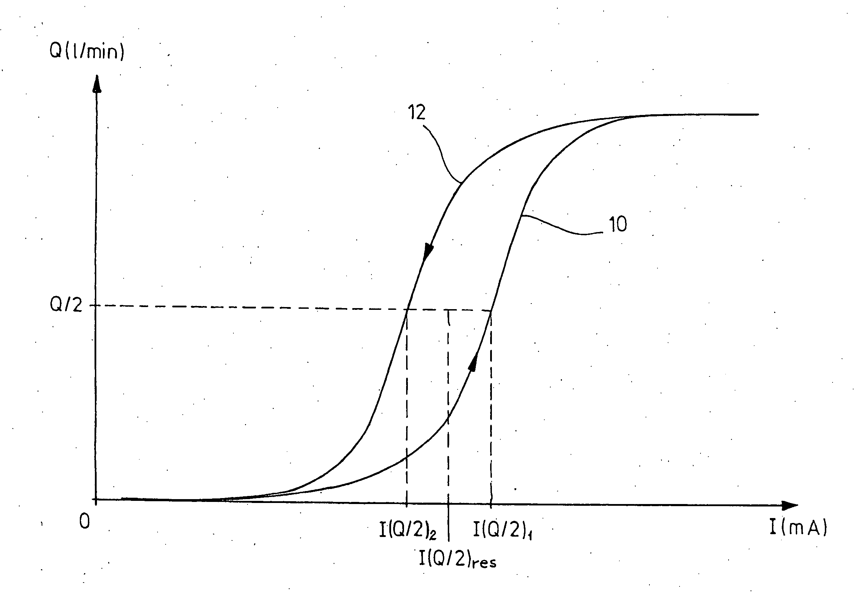

In der einzigen Figur ist ein Kennlinienverlauf für ein bestimmtes Ventil wiedergegeben. Der Volumenstrom durch das Ventil ist auf der Ordinate und der Steuerstrom auf der Abszisse aufgetragen. Man erkennt, daß bei zunehmendem Steuerstrom der Ast 10 einen anderen Verlauf hat als bei abnehmendem Steuerstrom (Ast 12). Es liegt mithin eine Hysterese vor. Bei dem erfindungsgemäßen Verfahren wird nun z.B. für den halben Nennvolumenstrom Q/2 ein mittlerer Stromwert errechnet aus der Formel:

$$I(Q/2)_{res} = \frac{I(Q/2)_1 + I(Q/2)_2}{2} \left[ mA \right]$$

In gleicher Weise kann ein typischer Stromwert aus der zuvor statistisch oder rechnerisch ermittelten Kennlinie I = f(Q) bei Q/2 ermittelt werden. Dieser Wert sei mit $I(Q/2)_{typ}$ bezeichnet. Der Korrekturwert $I_{Prop}$ ergibt sich dann aus folgender Formel:

$$I_{Prop} = I(Q/2)_{res} - I(Q/2)_{typ} + k \, ,$$

wobei k eine Konstante ist. Der Stromkorrekturwert wird nach dem Ventileinbau zusammen mit der bereits erwähnten mittleren Kennlinie I/f(Q) in der Software der elektronischen Steuervorrichtung abgelegt. Im Betrieb ergibt sich der Steuerstrom für das jeweilige Ventil aus der Formel:

$$I_{res} = f(Q) + (I_{Prop} - k)$$

Auf diese Weise läßt sich für jedes Ventil eines Steuerblocks in einem Flurförderzeug eine relativ genaue und reproduzierbare Einstellung durchführen, die darüber hinaus noch rasch vonstatten geht.
Wenn die Kennlinie des Ventils einen stark progressiven Verlauf hat, ist zweckmäßig, den Korrekturwert für einen Volumenstrom kleiner Q/2 zu ermitteln.

**Patentansprüche**

1. Verfahren zum Einstellen eines Steuerstroms von stromgesteuerten hysteresebehafteten Hydraulikventilen zur Betätigung einzelner Hydraulikfunktionen von Flurförderzeugen, wobei der Steuerstrom in einer elektronischen Steuervorrichtung nach Maßgabe eines manuell vorgegebenen Gebersignals erzeugt wird, **gekennzeichnet durch** folgende Schritte:

    - für jede **durch** ein Hydraulikventil gesteuerte hydraulische Funktion wird durch Versuche oder rechnerisch eine mittlere Kennlinie I = f(Q) ermittelt, in der I der Steuerstrom und Q der **durch** das Hydraulikventil strömende Volumenstrom des hydraulischen Mediums ist,
    - für jedes einzelne Hydraulikventil wird die spezifische Kennlinie $I_{res}$ = f(Q) gemessen und aus den Kennlinienwerten wird für einen vorgegebenen Volumenstromwert ein erster mittlerer Steuerstromwert ermittelt,
    - aus dem ersten mittleren Steuerstromwert und einem zweiten mittleren Steuerstromwert, der aus der ermittelten Kennlinie I = f(Q) bei dem vorgegebenen Volumenstromwert abgeleitet wird, wird die Differenz gebildet und eine Konstante addiert und der so ermittelte Steuerstromkorrekturwert als Code am Gehäuse des spezifischen Hydraulikventils angebracht.
    - bei Einbau des Hydraulikventils wird der Code ausgelesen und in die Steuervorrichtung eingelesen zwecks Korrektur des jeweiligen Steuerstroms nach der in der Steuervorrichtung ausgelegten Kennlinie I = f(Q) um den Steuerstrom-Korrekturwert, wenn die hydraulische Funktion angesteuert wird.

2. Verfahren nach Anspruch 1, **dadurch gekennzeichnet, daß** erster und/oder zweiter mittlerer Steuerstromwert bei der Hälfte Q/2 des Nennvolumenstroms des Ventils ermittelt wird.

3. Verfahren nach Anspruch 1, **dadurch gekennzeichnet, daß** erster und/oder zweiter mittlerer Steuerstromwert bei einem Volumenstromwert kleiner als die Hälfte des Nennvolumenstroms des Ventils ermittelt wird.

4. Verfahren nach Anspruch 1 oder 2, **dadurch gekennzeichnet, daß** der Stromkorrekturwert als Barcode auf das Ventilgehäuse angebracht und mittels eines Barcodescanners ausgelesen wird.

**Claims**

1. Method for the adjustment of a control current of current-controlled, hysteresis-affected hydraulic valves for the actuation of individual hydraulic functions of industrial trucks, the control current being generated in an electronic control device according to a manually pre-set transmitter signal, **characterised by** the following steps:

   - for each hydraulic function which is controlled by a hydraulic valve, an average characteristic line I = f(Q) is determined by experiments or via calculation, in which I is the control current and Q is the volume flux of the hydraulic medium flowing through the hydraulic valve,
   - the specific characteristic line Ires =f(Q) is measured for each individual hydraulic valve, and a first average control current value for a predetermined volume flux value is determined from the characteristic line values,
   - between the first average control current value and a second average control current value, which is derived from the determined characteristic line I = f(Q) at the pre-set volume flux value, the difference is formed and a constant is added, and the control current correction value thus determined is attached to the case of the individual hydraulic valve as a code.
   - upon assembly of the hydraulic valve, the code is read out and memorised into the control device, for the purpose of correction of the respective control current, when the hydraulic function is triggered, for the control current correction value according to the characteristic line I = f(Q) laid down in the control device.

2. Method according to claim 1, **characterised in that** first and/or second average control current value are determined at the half Q/2 of the nominal volume flux of the valve.

3. Method according to claim 1, **characterised in that** first and/or second average control current value are determined at a volume flux value less than the half of the nominal volume flux of the valve.

4. Method according to claim 1 or 2, **characterised in that** the current correction value is attached to the valve case as a barcode and is read out by means of a barcode scanner.

**Revendications**

1. Procédé de réglage d'un courant de commande de soupapes hydrauliques, commandées par courant et soumises à hystérésis, pour l'actionnement de fonctions hydrauliques individuelles de chariots de manutention, le courant de commande étant produit dans un dispositif de commande électronique d'après la valeur de mesure d'un signal de capteur prédéfini manuellement, **caractérisé par** les étapes suivantes:

   - pour chaque fonction hydraulique commandée par une soupape hydraulique, on détermine par des essais ou par le calcul une courbe caractéristique moyenne I=f(Q) dans laquelle I est le courant de commande et Q est le débit volumique du médium hydraulique s'écoulant au travers de la soupape hydraulique,
   - pour chacune des soupapes hydraulique concernée, la courbe caractéristique spécifique $I_{res}$=f(Q) est mesurée et, à partir des valeurs de la courbe caractéristique, une première valeur moyenne du courant de commande est déterminée pour une valeur prédéfinie du débit volumique,
   - à partir de la première valeur moyenne du courant de commande et d'une deuxième valeur moyenne du courant de commande, qui est déduite à partir de la courbe caractéristique I=f(Q) dans le cas de la valeur du débit volumique prédéfini, on forme la différence et une constante est ajoutée, puis la valeur de correction du courant de commande ainsi déterminée est appliquée comme code sur le boîtier de la soupape hydraulique spécifiée,
   - lors du montage de la soupape hydraulique, le code est lu et est enregistré dans le dispositif de commande pour, d'après la courbe caractéristique I=f(Q) mise en mémoire dans le dispositif de commande, corriger le courant de commande concerné, de la valeur de correction du courant de commande quand la commande de la fonction hydraulique est lancée.

2. Procédé suivant la revendication 1, **caractérisé en ce que** la première et/ou la deuxième valeur moyenne du courant de commande est déterminée pour la moitié Q/2 du débit volumique nominal de la soupape.

3. Procédé suivant la revendication 1, **caractérisé en ce que** la première et/ou la deuxième valeur moyenne du courant de commande est, pour une valeur du débit volumique déterminée plus petite que la moitié du débit volumique nominal de la soupape.

4. Procédé suivant la revendication 1 ou 2, **caractérisé en ce que** la valeur de correction du courant est appliquée, sous la forme d'un code barres, au boîtier de soupape et est lue au moyen d'un scanner à code barres.

Q (l/min)

Q/2

10

12

I(Q/2)₁

I(Q/2)₂

I(Q/2)res

I (mA)

0